# EUROPEAN PATENT APPLICATION

(11) **EP 4 064 019 A1**
(43) Date of publication of application: **28.09.2022**
(21) Application number: 22162481.0
(22) Date of filing: 16.03.2022
(51) Int. Cl.: G06F 3/0488

(54) **DISPLAY SYSTEM, DISPLAY METHOD, AND CARRIER MEANS**

(30) Priority: 23.03.2021 JP 2021048533
(71) Applicant: Ricoh Company, Ltd., Tokyo 143-8555 (JP)
(72) Inventor: OSHIMA, Yoshiaki, Japan, 143-8555 (JP)
(74) Representative: SSM Sandmair

(57) **Abstract**

A display system includes a receiving unit (27; 28) to receive an operation of changing a direction of display of a character string displayed in a first direction on a display; an acquisition unit (30) to acquire a second direction corresponding to the operation of changing; a conversion unit (30) to acquire, from a memory, a target language associated with the second direction and convert the character string into the acquired target language; and a display control unit (24) to control the display to display a converted character string in the target language and in the second direction.

## Description

### BACKGROUND

### Technical Field

Embodiments of the present disclosure relate to a display system, a display method, and carrier means.

### Related Art

There are display apparatuses that convert hand drafted data to a character string (character codes) and displays the character string on a screen by using a handwriting recognition technology. A display apparatus having a relatively large touch panel is used in a conference room or the like, and is shared by a plurality of users as an electronic whiteboard or the like. In some cases, a display apparatus is used as a written communication tool.

In addition, there is a technology of converting hand drafted data into a character string (text data) of another language using a handwriting recognition technology. Further, Japanese Unexamined Patent Application Publication No. 2003-162527 discloses an apparatus that displays, on a display, second language information based on relative positions of a user of a first pen and a user of a second pen such that the second language information is positionally correct when viewed from the user of the second pen.

However, there is no conventional technology that converts a character string based on hand drafted data into a target language in accordance with the target direction of display of the character string, and displays the converted character string.

For example, a first person and a second person face each other across a display apparatus. The first person handwrites Japanese, and the display apparatus displays a character string recognized from the handwriting in the direction facing the first person. Although the display apparatus can convert the character string into a different language (e.g., English), it is difficult for the second person to read the converted character string because the direction of the character string is reversed.

### SUMMARY

An embodiment provides a display system that includes a receiving unit to receive an operation of changing a direction of display of a character string displayed in a first direction on a display; an acquisition unit to acquire a second direction corresponding to the operation of changing; a conversion unit to acquire, from a memory, a target language associated with the second direction and convert the character string into the acquired target language; and a display control unit to control the display to display a converted character string in the target language and in the second direction.

Another embodiment provides a display method that includes receiving an operation of changing a target direction of display of a character string displayed in a first direction on a display; acquiring a second direction corresponding to the operation of changing; acquiring, from a memory, a target language associated with the second direction; converting the character string into the target language; and controlling the display to display a converted character string in the target language and in the second direction.

Another embodiment provides carrier means carrying computer readable codes for controlling a computer to carry out the method described above.

According to one or more embodiments, the display apparatus displays a character string converted into a target language associated with the direction of display of the converted character string.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 illustrates an example of a Japanese character string converted from Japanese handwriting;
FIG. 2 illustrates an example of display of a character string converted by a display apparatus according to one embodiment of the present disclosure;
FIG. 3 illustrates another example of display of a character string converted by the display apparatus according to one embodiment;
FIGS. 4A to 4C are diagrams illustrating examples of a general arrangement of the display apparatus according to embodiments;
FIG. 5 is a block diagram illustrating an example of a hardware configuration of the display apparatus according to embodiments;
FIG. 6 is a block diagram illustrating an example of a functional configuration of the display apparatus according to Embodiment 1;
FIG. 7 is a diagram illustrating an example of an operation guide and selectable character string candidates provided by the display apparatus according to Embodiment 1;
FIG. 8 is a diagram illustrating a target direction of display of a character string;
FIG. 9 is a diagram schematically illustrating correspondence between the direction of handwriting by a user and the target direction of display;
FIGS. 10A to 10C are diagrams illustrating an example of a method of receiving angle information;
FIG. 11 is a diagram illustrating an example of a method for the display apparatus to associate the target direction of display with a target language based on a user operation;
FIG. 12 is a diagram illustrating an example of conversion of a character string in accordance with the target direction of display performed by the display apparatus according to one embodiment;
FIGS. 13A and 13B illustrate an example of conversion when there is a plurality of different language speakers at the same time;
FIG. 14 is a diagram illustrating a rotation operation using an icon according to one embodiment;
FIG. 15 is a diagram illustrating a rotation operation by execution of an operation command according to one embodiment;
FIG. 16 is a flowchart illustrating a procedure for the display apparatus to convert a character string into a target language associated with the target direction of display in response to a user operation, according to one embodiment;
FIG. 17 is a diagram illustrating an example of conversion of a character string that is rotated to the target direction of display and converted in accordance with the target direction of display, without rotating a screen image; performed by the display apparatus according to one embodiment;
FIG. 18 is a diagram illustrating a method for the display apparatus according to one embodiment to receive an operation of rotating a character string without rotating a screen image;
FIG. 19 is a flowchart illustrating a procedure for the display apparatus according to one embodiment to convert a character string into a target language associated with the target direction of display in response to a user operation;
FIGS. 20A to 20C are diagrams illustrating an example in which the display apparatus according to one embodiment receives designation of a target direction of display by being tilted by a user;
FIGS. 21A to 22C are diagrams illustrating another example in which the display apparatus according to one embodiment receives designation of a target direction of display by being tilted by a user;
FIG. 22 is a flowchart illustrating an example of a procedure for the display apparatus according to one embodiment to convert a character string into a target language associated with a target direction of display detected based on the direction of gravity;
FIG. 23 is a diagram illustrating a procedure for the display apparatus according to one embodiment to convert a character string into a target language and display the converted character string in a font associated with the target direction of display;
FIG. 24 is a diagram illustrating a configuration of a display system according to another embodiment;
FIG. 25 is a diagram illustrating a configuration of a display system according to another embodiment;
FIG. 26 is a diagram illustrating a configuration of a display system according to another embodiment; and
FIG. 27 is a diagram illustrating a configuration of a display system according to another embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of a display apparatus and a display method performed by the display apparatus according to embodiments of the present disclosure, with reference to the attached drawings.

### Embodiment 1

A display apparatus may be used in a workplace or a site where different language speakers are mixed. In such a situation, when a first person who speaks a certain language (first language) wants to convey, by handwriting, information to a second person who speaks a different language (second language), the communication is facilitated by converting and displaying the character string displayed on the display into the second language understood by the second person. However, when the persons surrounding the display apparatus communicate with each other, the direction in which the character strings faces may vary depending on the location of the person.

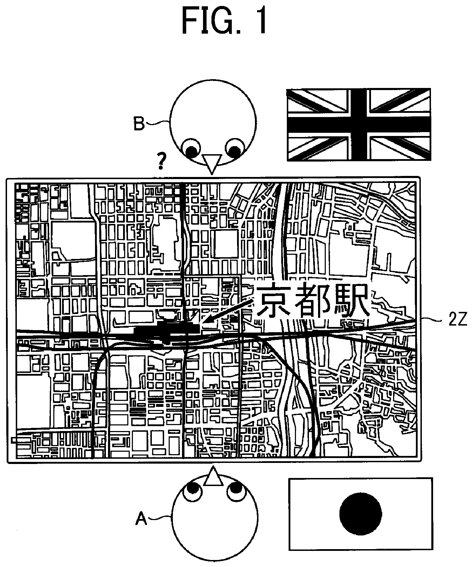

A description is given below of a display apparatus 2Z according a comparative example of the present embodiment, with reference to FIG. 1. FIG. 1 illustrates a Japanese character string converted from Japanese handwriting. A display apparatus 2Z may be used for written communication in a workplace or a site where different language speakers are mixed.

The display apparatus 2Z displays a map instructed by a person A and further displays a Japanese character string " 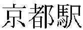 " (kanji characters meaning "Kyoto station") based on hand drafted input by the person A. In the comparative example, the display apparatus 2Z converts Japanese into another language and displays the conversion result in the direction corresponding to the orientation of the display apparatus 2 used by the person A. That is, the display apparatus 2Z displays "Kyoto station" so as to face the person A not a person B.

Although the person B opposite the person A as illustrated in FIG. 1 may read the alphabets displayed in reverse, it is not easy to read the character string "Kyoto station", which is not familiar to the person B, from the opposite side.

A description is given of an overview of a display apparatus according to the present embodiment.

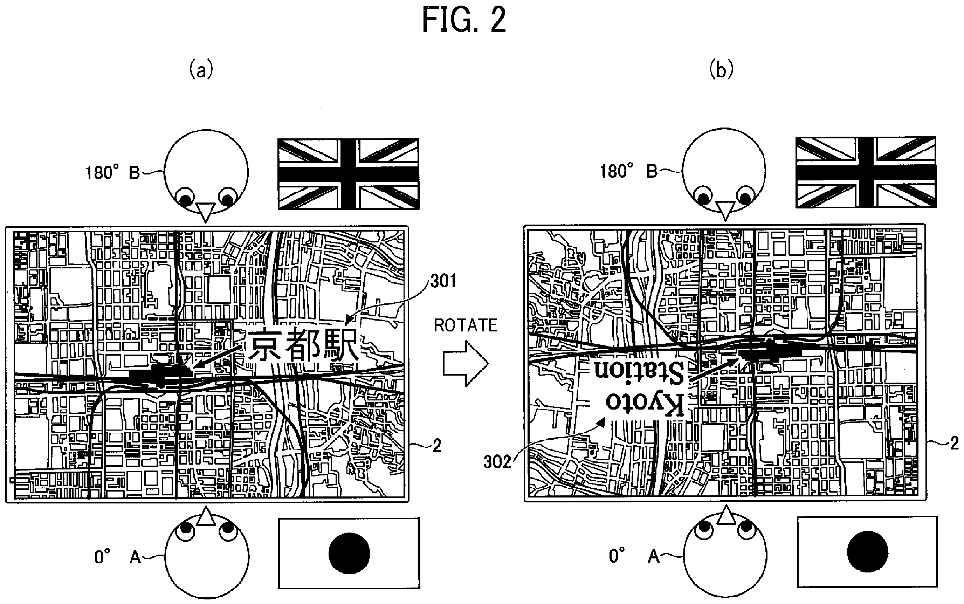

Therefore, a display apparatus 2 (see FIG. 2) according to the present embodiment has the following configurations, to display a character string in a language understandable by a user and in a direction facing that user.
(i) The display apparatus 2 receives the setting of a target language (conversion destination language) for each target direction of display of a character string.
(ii) When rotating the character string for a certain target direction of display, the display apparatus 2 displays a converted character string in a target language associated with the target direction of display after rotation.

FIG. 2 illustrates an example of display of a character string converted by the display apparatus 2 according to the present embodiment. For example, in a state (a) of FIG. 2, Japanese is associated with 0-degree direction, and English is associated with 180- degree direction. In the state (a) of FIG. 2, the person A handwrites a Japanese character string 301 (" 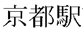 " meaning "Kyoto station"). In response to an operation of rotation to the 180-degree direction, the display apparatus 2 converts the Japanese character string 301 into an English character string 302 (Kyoto station), which is the target language associated with the 180-degree direction. Further, the English character string 302 (Kyoto station) is rotated by 180 degrees and displayed as illustrated in a state (b) of FIG. 2. Therefore, the person B can read the English character string 302 (Kyoto station) in the direction facing the English character string 302.

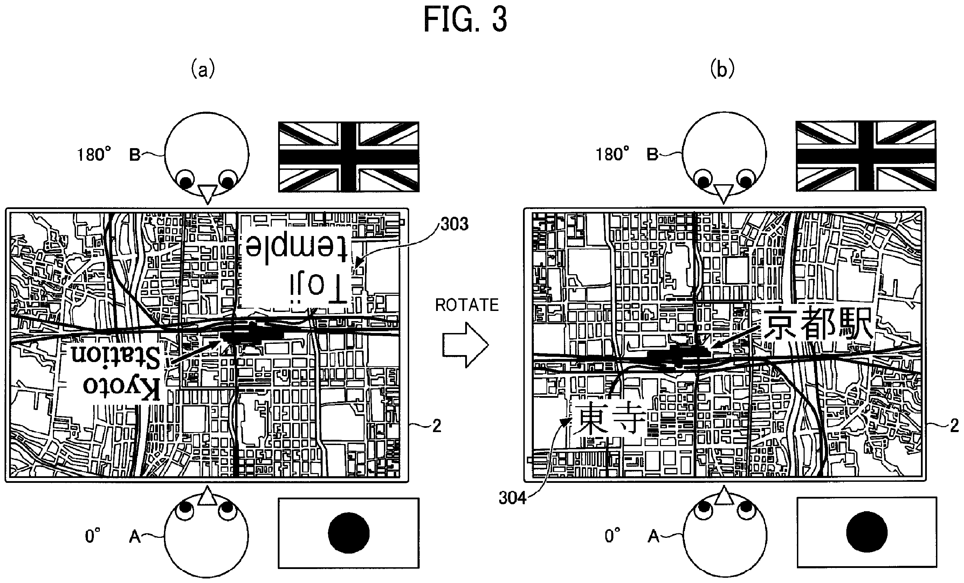

Conversely, in a state (a) of FIG. 3, an English character string 303 (Toji temple) is displayed based on the hand drafted input by the person B from the 180-degree direction. As illustrated in a state (b) of FIG. 3, when the person B rotates the English character string 303 (Toji temple) to the 0-degree direction, the display apparatus 2 converts the English character string 303 (Toji temple) into a Japanese character string 304 ( 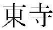 ) which is the target language associated with the 0-degree direction. Further, the Japanese character string 304 ( 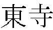 ) is displayed in the direction of 0 degree. Therefore, the person A can read the Japanese character string 304 ( 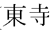 ) in the direction facing the Japanese character string 304 ( 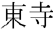 ).

As described above, in the display apparatus 2 of the present embodiment, the target direction of display is associated with the target language. Accordingly, when the user instructs the display apparatus 2 to display the character string for a desired target direction of display, the display apparatus 2 displays the character string in a language associated with the target direction of display. That is, the display apparatus 2 enables the user to read a character string in an understandable language and in the direction facing the character string.

### Terms

"Input device" may be any means with which a user inputs handwriting (hand drafting) by designating coordinates on a touch panel. Examples thereof include a pen, a human finger, a human hand, and a bar-shaped member.

A series of user operations including engaging a writing mode, recording movement of an input device or portion of a user, and then disengaging the writing mode is referred to as a stroke. The engaging of the writing mode may include, if desired, pressing an input device against a display or screen, and disengaging the writing mode may include releasing the input device from the display or screen. Alternatively, a stroke includes tracking movement of the portion of the user without contacting a display or screen. In this case, the writing mode may be engaged or turned on by a gesture of a user, pressing a button by a hand or a foot of the user, or otherwise turning on the writing mode, for example using a pointing device such as a mouse. The disengaging of the writing mode can be accomplished by the same or different gesture used to engage the writing mode, releasing the button, or otherwise turning off the writing mode, for example using the pointing device or mouse. "Stroke data" is data based on a trajectory of coordinates of a stroke input with the input device. Such stroke data may be interpolated appropriately. "Hand drafted data" is data having one or more stroke data. "Hand drafted data" is data used for displaying (reproducing) a display screen including objects handwritten or hand-drafted by the user. "Hand drafted input" relates to a user input such as handwriting, drawing, and other forms of input. The hand drafted input may be performed via touch interface, with a tactile object such as a pen or stylus or with the user's body. The hand drafted input may also be performed via other types of input, such as gesture-based input, hand motion tracking input or other touch-free input by a user.

An "object" refers to an item displayed on a screen and includes an object drawn by a stroke.

The term "object" in this specification also represents an object of display.

A character string obtained by character recognition and conversion from hand drafted data may include, in addition to text data, data displayed based on a user operation, such as a stamp of a given character or mark such as "complete," a graphic such as a circle or a star, or a line.

"Confirmed data" refers to one or more character codes (font) converted from hand drafted data by character recognition and selected by the user, or hand drafted data that is determined not to be converted into one or more character codes (font).

An "operation command" refers to a command prepared for instructing a hand drafted input device to execute a specific process. In the present embodiment, a description is given of an example in which the display apparatus 2 receives, from the user, an instruction to rotate the entire image and an instruction to associate the target direction of display with a converted character string. Operation command examples further include commands for editing, modifying, inputting, or outputting a character string.

The character string includes one or more characters handled by a computer. The character string actually is one or more character codes. Characters include numbers, alphabets, symbols, and the like. The character string is also referred to as text data.

Conversion refers to an act of changing or being changed. Converting the language of a character string may be referred to as translation.

The target direction of display is a direction facing a character string displayed on the screen. The target direction of display in this embodiment may be any direction from the center of the display to the 360-degree circumference of the display. The character string faces the user in this target direction of display. "Facing" refers to looking straight at the obj ect.

### Configuration of Apparatus

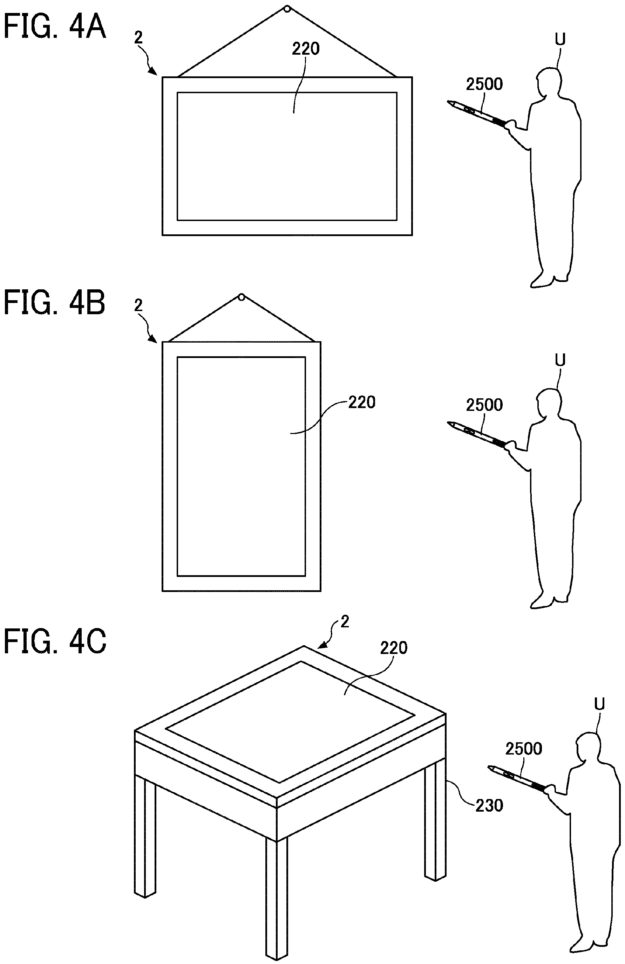

Referring to FIGS. 4A to 4C, a description is given of a general arrangement of the display apparatus 2 according to the present embodiment. FIGS. 4A to 4C are diagrams illustrating examples of general arrangement of the display apparatus 2. FIG. 4A illustrates, as an example of the display apparatus 2, an electronic whiteboard having a landscape-oriented rectangular shape and being hung on a wall.

As illustrated in FIG. 4A, the display apparatus 2 includes a display 220 (a screen). A user U handwrites (also referred to as "inputs" or "draws"), for example, a character on the display 220 using a pen 2500.

FIG. 4B illustrates, as another example of the display apparatus 2, an electronic whiteboard having a portrait-oriented rectangular shape and being hung on a wall.

FIG. 4C illustrates, as another example, the display apparatus 2 placed on the top of a desk 230. The display apparatus 2 has a thickness of about 1 centimeter. It is not necessary to adjust the height of the desk 230, which is a general-purpose desk, when the display apparatus 2 is placed on the top of the desk 230. Further, the display apparatus 2 is portable and easily moved by the user.

Examples of an input method of coordinates by the pen 2500 include an electromagnetic induction method and an active electrostatic coupling method. In other example, the pen 2500 further has functions such as pen pressure detection, inclination detection, a hover function (displaying a cursor before the pen is brought into contact), or the like.

### Hardware Configuration

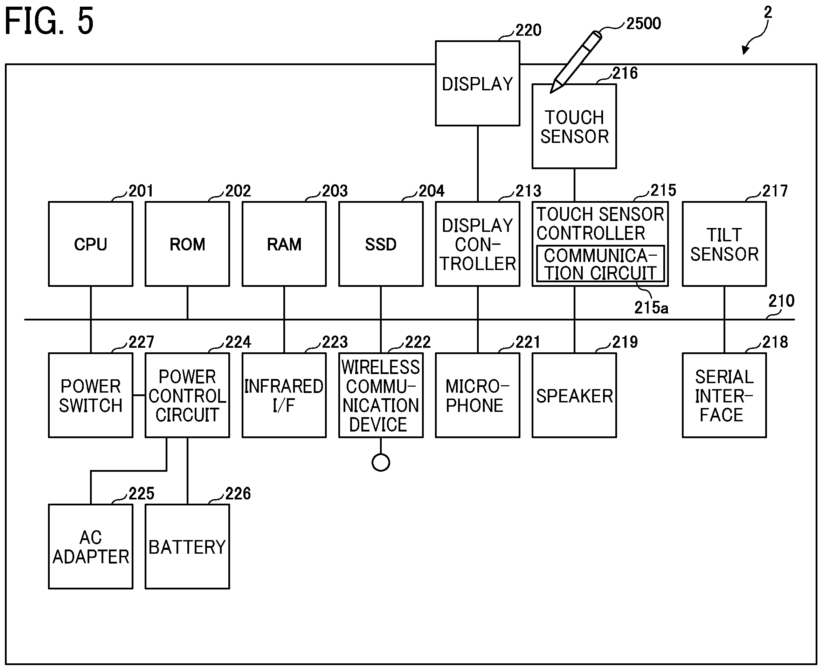

A description is given of a hardware configuration of the display apparatus 2 according to the present embodiment, with reference to FIG. 5. The display apparatus 2 has a configuration of an information processing apparatus or a computer as illustrated in FIG. 5. FIG. 5 is a block diagram illustrating an example of the hardware configuration of the display apparatus 2. As illustrated in FIG. 5, the display apparatus 2 includes a central processing unit (CPU) 201, a read only memory (ROM) 202, a random access memory (RAM) 203, and a solid state drive (SSD) 204.

The CPU 201 controls entire operation of the display apparatus 2. The ROM 202 stores a control program such as an initial program loader (IPL) to boot the CPU 201. The RAM 203 is used as a work area for the CPU 201.

The SSD 204 stores various data such as an operating system (OS) and a control program for display apparatuses. This program may be an application program that runs on an information processing apparatus equipped with a general-purpose operating system (OS) such as WINDOWS, MAC OS, ANDROID, and IOS.

The display apparatus 2 further includes a display controller 213, a touch sensor controller 215, a touch sensor 216, a tilt sensor 217, a serial interface 218, a speaker 219, a display 220, a microphone 221, a wireless communication device 222, an infrared interface (I/F) 223, a power control circuit 224, an AC adapter 225, a battery 226, and a power switch 227.

The display controller 213 controls display of an image for output to the display 220, etc. The touch sensor 216 detects that the pen 2500, a user's hand or the like is brought into contact with the display 220. The pen or the user's hand is an example of input device. The touch sensor 216 also receives a pen identifier (ID).

The touch sensor controller 215 controls processing of the touch sensor 216. The touch sensor 216 performs coordinate input and coordinate detection. More specifically, in a case where the touch sensor 216 is optical type, for inputting and detecting coordinates, the display 220 is provided with two light receiving and emitting devices disposed on both upper side ends of the display 220, and a reflector frame surrounding the sides of the display 220. The light receiving and emitting devices emit a plurality of infrared rays in parallel to a surface of the display 220. Light-receiving elements receive lights passing in the direction that is the same as an optical path of the emitted infrared rays, which are reflected by the reflector frame. The touch sensor 216 outputs position information of the infrared ray that is blocked by an object after being emitted from the two light receiving and emitting devices, to the touch sensor controller 215. Based on the position information of the infrared ray, the touch sensor controller 215 detects a specific coordinate that is touched by the object. The touch sensor controller 215 further includes a communication circuit 215a for wireless communication with the pen 2500. For example, when communication is performed in compliance with a standard such as BLUETOOTH (registered trademark), a commercially available pen can be used.

When one or more pens 2500 are registered in the communication circuit 215a in advance, the display apparatus 2 communicates with the pen 2500 without connection setting between the pen 2500 and the display apparatus 2, performed by the user.

The power switch 227 turns on or off the power of the display apparatus 2. The tilt sensor 217 detects the tilt angle of the display apparatus 2. The tilt sensor 217 is mainly used to detect whether the display apparatus 2 is being used in any of the states in FIG. 4A, 4B, or 4C. For example, the display apparatus 2 automatically changes the thickness of characters or the like depending on the detected state.

The serial interface 218 is a communication interface to connect the display apparatus 2 to extraneous sources such as a universal serial bus (USB). The serial interface 218 is used to input information from extraneous sources. The speaker 219 is used to output sound, and the microphone 221 is used to input sound. The wireless communication device 222 communicates with a terminal carried by the user and relays the connection to the Internet, for example.

The wireless communication device 222 performs communication in compliance with Wi-Fi, BLUETOOTH (registered trademark) or the like. Any suitable standard can be applied other than the Wi-Fi and BLUETOOTH (registered trademark). The wireless communication device 222 forms an access point. When a user sets a service set identifier (SSID) and a password that the user obtains in advance in the terminal carried by the user, the terminal is connected to the access point.

It is preferable that two access points are provided for the wireless communication device 222 as follows:
(a) Access point to the Internet; and
(b) Access point to Intra-company network to the Internet.

The access point (a) is for users other than, for example, company staffs. The access point (a) does not allow access from such users to the intra-company network, but allow access to the Internet. The access point (b) is for intra-company users and allows such users to access the intra-company network and the Internet.

The infrared I/F 223 detects an adjacent display apparatus 2. The infrared I/F 223 detects an adjacent display apparatus 2 using the straightness of infrared rays. Preferably, one infrared I/F 223 is provided on each side of the display apparatus 2. This configuration allows the display apparatus 2 to detect the direction in which the adjacent display apparatus 2 is disposed. Such arrangement extends the screen. Accordingly, the user can instruct the adjacent display apparatus 2 to display a previous handwritten object. That is, one display 220 (screen) corresponds to one page, and the adjacent display 220 displays the handwritten object on a separate page.

The power control circuit 224 controls the AC adapter 225 and the battery 226, which are power supplies for the display apparatus 2. The AC adapter 225 converts alternating current shared by a commercial power supply into direct current.

In a case where the display 220 is a so-called electronic paper, the display 220 consumes little or no power to maintain image display. In such case, the display apparatus 2 may be driven by the battery 226. With this structure, the display apparatus 2 is usable as, for example, a digital signage in places such as outdoors where power supply connection is not easy.

The display apparatus 2 further includes a bus line 210. The bus line 210 is an address bus or a data bus that electrically connects the elements illustrated in FIG. 5, such as the CPU 201, to each other.

The touch sensor 216 is not limited to the optical type. In another example, the touch sensor 216 is a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display. The touch sensor 216 can be of a type that does not require an electronic pen to detect whether the pen tip is in contact with the surface of the display 220. In this case, a fingertip or a pen-shaped stick is used for touch operation. In addition, the pen 2500 can have any suitable shape other than a slim pen shape.

### Functions

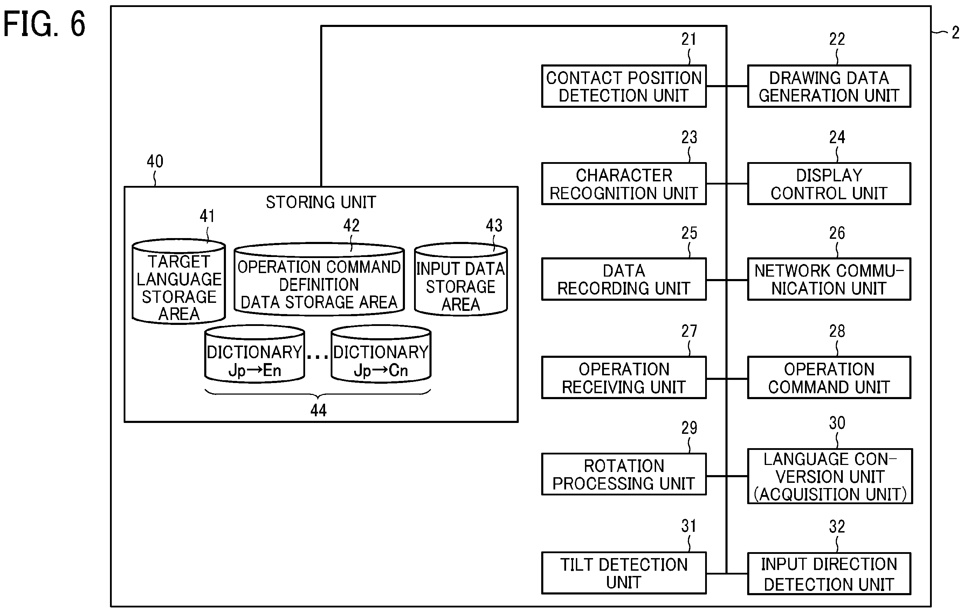

A description is now given of a functional configuration of the display apparatus 2 according to the present embodiment, with reference to FIG. 6. FIG. 6 is a block diagram illustrating an example of the functional configuration of the display apparatus 2 according to the present embodiment. The display apparatus 2 includes a contact position detection unit 21, a drawing data generation unit 22, a character recognition unit 23, a display control unit 24, a data recording unit 25, a network communication unit 26, an operation receiving unit 27, an operation command unit 28, a rotation processing unit 29, a language conversion unit 30, a tilt detection unit 31, and an input direction detection unit 32. The functional units of the display apparatus 2 are implemented by or are caused to function by operation of any of the elements illustrated in FIG. 5 according to an instruction from the CPU 201 according to a program loaded from the SSD 204 to the RAM 203.

The contact position detection unit 21 is implemented by the touch sensor 216 and detects coordinates of the position touched by the pen 2500. The drawing data generation unit 22 acquires the coordinates (i.e., contact coordinates) of the position touched by the pen tip of the pen 2500 from the contact position detection unit 21. The drawing data generation unit 22 connects a plurality of contact coordinates into a coordinate point sequence by interpolation, to generate stroke data.

The character recognition unit 23 performs character recognition processing on one or more stroke data (hand drafted data) input by the user and converts the stroke data into one or more character codes. The character recognition unit 23 recognizes characters (of multilingual languages such as English as well as Japanese), numbers, symbols (e.g., %, $, and &), graphics (e.g., lines, circles, and triangles) concurrently with a pen operation by the user. Although various algorithms have been proposed for the recognition method, a detailed description is omitted on the assumption that known techniques are used in the present embodiment.

The display control unit 24 displays, on a display, handwritten object, a character string converted from the hand drafted data, and an operation menu to be operated by the user. The data recording unit 25 stores hand drafted data input on the display apparatus 2, a converted character string, a screenshot on a personal computer (PC) screen, a file, and the like in a storing unit 40. The network communication unit 26 connects to a network such as a local area network (LAN), and transmits and receives data to and from other devices via the network.

The operation command unit 28 detects whether or not the character string recognized by the character recognition unit 23 corresponds to an operation command, and executes the detected operation command when the user presses the operation command.

The rotation processing unit 29 rotates the entire image or a character string in accordance with an operation command or a user operation. In the present embodiment, the display apparatus 2 rotates a character string or the entire image including the character string. Hereinafter, the expression rotation of the entire image means that both the character string and the image are rotated by the same angle.

The language conversion unit 30 converts a character string displayed on a screen into a language associated with the target direction of display of the character string when the entire image or the character string is rotated. The language conversion unit 30 functions as an acquisition unit that acquires the target language associated with the target direction of display from a target language storage area 41.

The tilt detection unit 31 detects the direction of gravity acting on the display apparatus 2 using the detection result of the tilt sensor 217. The gravity direction is, for example, the direction corresponding to one of the four sides of the display apparatus 2.

The input direction detection unit 32 detects a direction that faces the user who has input handwriting based on the hand drafted data. Alternatively, the input direction detection unit 32 detects the direction facing the user who has input handwriting using an input device, according to hand drafted data input in a predetermined method.

The display apparatus 2 includes the storing unit 40 implemented by, for example, the SSD 204 or the RAM 203 illustrated in FIG. 5. The storing unit 40 includes the target language storage area 41, an operation command definition data storage area 42, an input data storage area 43, and dictionaries 44 (e.g., bilingual dictionaries or conversion dictionaries).

**Table 1**

| Direction of display (degrees) | Target language |
|---|---|
| 0 | Japanese |
| 90 | Chinese |
| 180 | English |
| 270 | Korean |

Table 1 illustrates association between the target direction of display and the target language registered in the target language storage area 41. In the target language storage area 41, the target language is registered in association with the target direction of display of character strings.

For example, the 0-degree direction is associated with Japanese, the 90-degree direction is associated with Chinese, the 180-degree direction is associated with English, and the 270-degree direction is associated with Korean. The display apparatus 2 receives setting of the association between the target direction of display and the target language from the user. Depending on the target direction of display, the target language may not be registered. For example, the target directions of display are determined as the 90-degree direction, the 180-degree direction, and the 270-degree direction counterclockwise from a reference target direction of display that is the 0-degree direction.

**Table 2**

| Recognized character string | Command name | Processing |
|---|---|---|
| Rotate 90, 180, 270 | Rotate display by 90° | Rotate entire image by 90° |
| | Rotate display by 180° | Rotate entire image by 180° |
| | Rotate display by 270° | Rotate entire image by 270° |
| Japanese | Set to Japanese | Set target language associated with the pen to Japanese |
| English | Set to English | Set target language associated with the pen to English |

Table 2 schematically illustrates operation command definition data stored in the operation command definition data storage area 42. The operation command definition data defines an operation command for a user to instruct the display apparatus 2 with a recognized character string obtained by character recognition.

For example, when the character string "rotate," "90," "180," or "270" is recognized, the corresponding operation command is "rotate display by 90 degrees," "rotate display by 180 degrees," or "rotate display by 270 degrees." The display apparatus 2 displays such an operation command and receives an operation from the user. When the operation command is selected, the operation command unit 28 executes the content described in the item "processing." For example, the operation command unit 28 instructs the rotation processing unit 29 to rotate the entire image and instructs the language conversion unit 30 to convert the character string with designation of the target direction of display.

**Table 3**

| |
|---|
| DataId= "4" Type="Text" Penld= "2" Angle="180 dig" "StartPoint="x1,y1" StartTime="yyyy-mm-ddThh:mm:ss.sss+09:00" EndPoint="xn,yn" EndTime="yyyy-mm-ddThh:mm:ss.sss+09:00" FontName="POP" FontSize="50.0 pt" "Text= 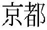 Language="Japanese" |

Table 3 schematically presents the content of the input data storage area 43. The input data indicates attributes of data input by a user. The input data is recorded for each object (e.g., one stroke data, one character string, or one image).

"Datald" is information identifying the input data.

"Type" is the type of input data and includes stroke, text, and image. The attribute held by the input data may be different depending on type. Table 3 presents a case where the "type" is "text." The text represents a character string, and the image is an image.

"PenId" is information identifying the pen 2500 used to input a character string.

"Angle" is the target direction of display of the character string.

"StartPoint" is the coordinates of the upper left apex of the circumscribed rectangle of the character string.

"StartTime is the time of start of writing the character string by the user.

"EndPoint" is the coordinates of the lower right apex of the circumscribed rectangle of the character string.

"EndTime" is a time when the user has finished writing the character string.

"FontName" is the font name of the character string.

"FontSize" is the character size.

"Text" is an input text (character code).

"Language" is the language of the character string.

### Example of Display of Selectable Candidates

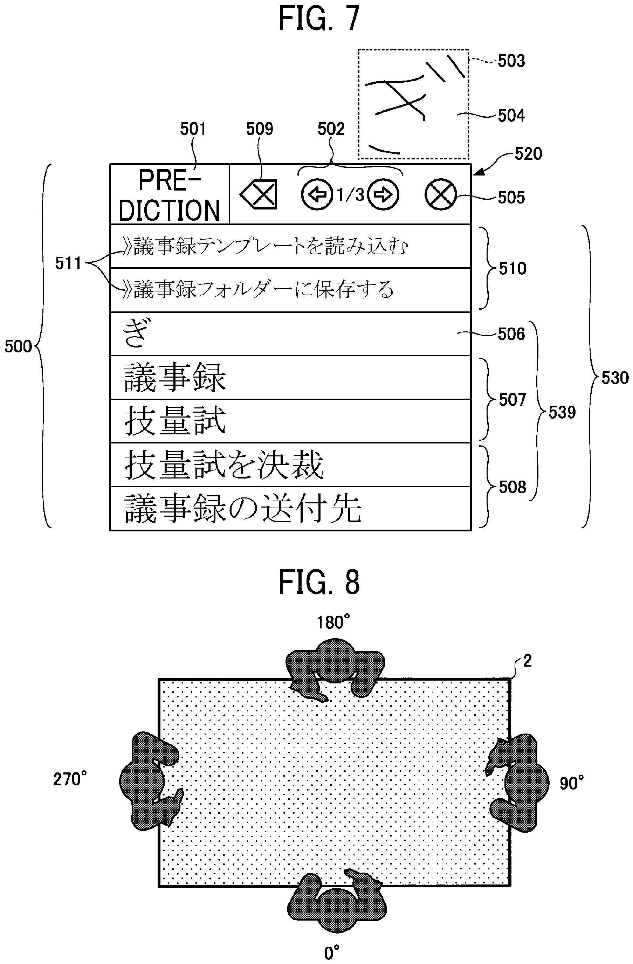

Next, with reference to FIG. 7, a description is given of the operation guide 500 displayed at the time of converting hand drafted data. FIG. 7 illustrates an example of the operation guide 500 and selectable candidates 530 displayed by the operation guide 500. The operation guide 500 is displayed in response to hand drafted input by the user. In the example of FIG. 5, a handwritten object 504 is displayed based on the hand drafted input. The operation guide 500 displays a recognized character string candidate 506 (candidate of the character string recognized from the handwriting), converted character string candidates 507, predicted converted-character string candidates 508, and operation command candidates 510. The selectable candidates 530 includes the recognized character string candidate 506, the converted character string candidates 507, the predicted converted-character string candidates 508, and the operation command candidate 510. The selectable candidates 530 other than the operation command candidates 510 are referred to as character string candidates 539.

The handwritten object 504 is a character " 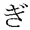 " (Japanese hiragana character, pronounced as "gi") handwritten by the user. The display apparatus 2 displays a rectangular handwriting area enclosure 503 enclosing the handwritten object 504. In the example illustrated in FIG. 7, the operation guide 500 is displayed in response to input of one character as an example, but the time of display thereof is not limited thereto. The operation guide 500 is displayed in response to suspension of handwriting by the user. Therefore, the number of characters in the handwritten object 504 is any number.

As each of the recognized character string candidate 506, the converted character string candidates 507, and the predicted converted-character string candidates 508, one or more candidates are arranged in descending order of probability. The recognized character string candidate 506 " 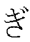 " (Japanese hiragana character, pronounced as "gi") is a candidate as the result of handwriting recognition. In this example, the character recognition unit 23 has correctly recognized " 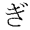 " (Japanese hiragana character, pronounced as "gi").

The recognized character string candidate 506 " 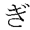 " (Japanese hiragana character, pronounced as "gi") is converted into a kanji character (for example, " 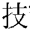 " pronounced as "gi" and having a meaning "technique"). As the converted character string candidates 507, character strings (for example, idioms) including the kanji " 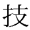 " are presented. In this example, " 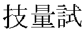 " is an abbreviation of " 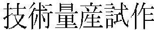 " (Japanese kanji character, meaning "technical pre-production" and pronounced as "gijutsu-ryousan-shisaku"). The predicted converted-character string candidates 508 are candidates predicted from the converted character string candidates 507, respectively. In this example, as the predicted converted-character string candidates 508, " 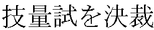 " (meaning "approving technical pre-production") and " 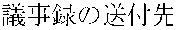 " (meaning "destination of minutes") are displayed.

The operation command candidates 510 are candidates of predefined operation commands (command such as file operation or text editing) displayed in accordance with the recognized character. In the example of FIG. 7, a line head character "»" 511 indicates an operation command candidate. In the example in FIG. 7, the converted character string candidates 507 " 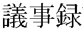 " (pronounced as "gijiroku" and meaning "minutes") of"#" (Japanese hiragana character, pronounced as "gi") partially matches the definition data, and the operation command candidates 510 including " 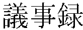 " are displayed. The operation command candidates 510 are " 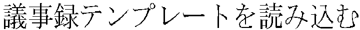 " that means reading minutes templates," and " 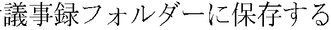 " that means storing in a minutes folder.

The operation command candidate 510 is displayed when the operation command definition data including the converted character string is found, and is not displayed in the case of no-match. In the present embodiment, the operation command candidates 510 related to conversion are displayed.

The operation guide 500 includes an operation header 520 including buttons 501, 502, 505, and 509. The button 501 is a graphical representation for receiving an operation of switching between predictive conversion and kana conversion. The button 502 is a graphical representation for receiving page operation of the candidate display. In the example illustrated in FIG. 7, there are three candidate display pages, and the first page is currently displayed. The button 505 is a graphical representation for receiving closing of the operation guide 500. When the operation receiving unit 27 receives pressing by the user of the button 505, the display control unit 24 deletes the displayed objects other than the handwritten object. The button 509 is a graphical representation for receiving batch deletion of the display. When the operation receiving unit 27 receives pressing by the user of the button 509, the display control unit 24 deletes the operation guide 500 and the handwritten object 504 illustrated in FIG. 7, thereby enabling the user to perform handwriting input from the beginning.

### Registration of Target Direction of Display and Target Language

FIG. 8 is a diagram illustrating an example of the target direction of display of the display apparatus 2. In the present embodiment, a direction perpendicular to a reference side of the display from the center of the display is 0 degree. The directions that face respective users on other sides of the display are 90 degrees, 180 degrees, and 270 degrees counterclockwise, respectively.

There are several methods for the display apparatus 2 to determine in which direction (on which of the four sides) the user who is inputting handwriting is present. As one method, the input direction detection unit 32 determines in which direction (on which of the four sides) the user is present based on the direction of handwriting by the user.

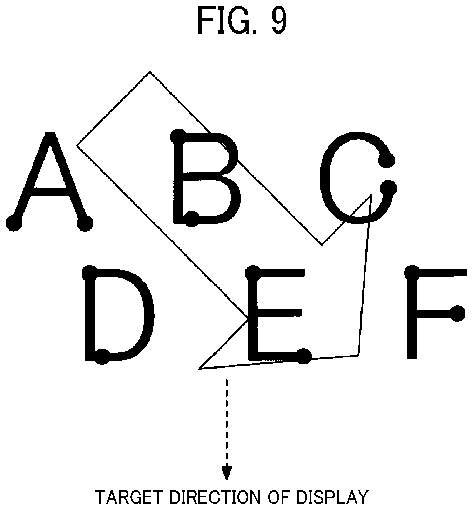

FIG. 9 is a diagram schematically illustrating the correspondence between the user's handwriting direction and the target direction of display. For example, in a case where the coordinates of the stroke data move from left to right and from top to bottom (horizontal writing from left to right), the target direction of display corresponds to the side present from top to bottom direction. In FIG. 9, the start point and the end point of each character are indicated by black circles, and the characters as a whole move from the upper left to the lower right.

Similarly, in a case where the coordinates of the stroke data move from top to bottom and from right to left (vertical writing from top to bottom), the target direction of display corresponds to the side present from top to bottom direction. In this way, the input direction detection unit 32 estimates in which direction (on which of the four sides) the user is present based on the hand drafted data.

The correspondence between the coordinates of the hand drafted data and the target direction of display may be generated by the manufacturer of the display apparatus 2 through machine learning. For example, time-series hand drafted data is input to a neural network, and the target direction of display is given as teacher data, so that the input direction detection unit 32 is obtained as a learned model.

In FIG. 8, the display apparatus 2 has the four target direction of display of 0 degree, 90 degrees, 180 degrees, and 270 degrees, but the target direction of display may be set more finely. The target direction of display may be set at intervals of 45 or 30 degrees, for example.

As another method, the display apparatus 2 uses the pen 2500 to determine in which direction (on which of the four sides) the user is present. In this method, first, the target direction of display is associated with the pen 2500.

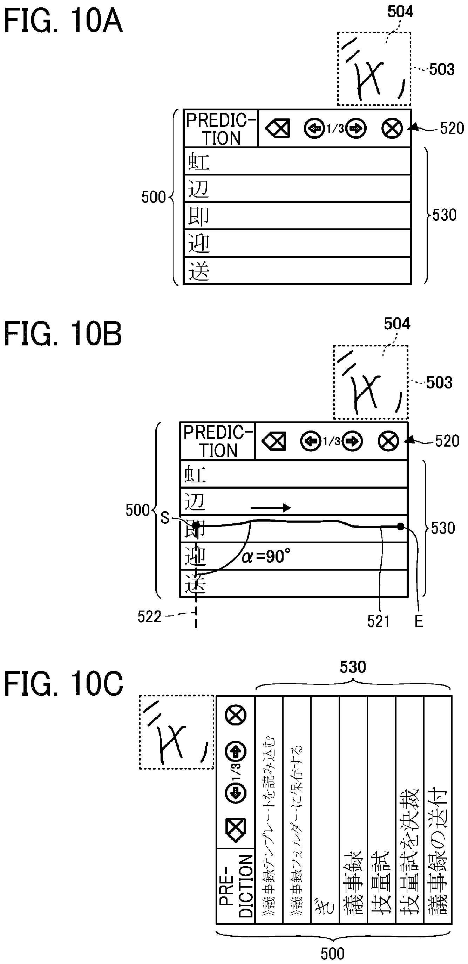

FIGS. 10A to 10C are diagrams illustrating an example of a method of receiving angle information. FIGS. 10A to 10C illustrate a case where the display apparatus 2 receives angle information input by a user present in the 90-degree direction (see FIG. 8) of the display apparatus 2. Since a character or the like handwritten from the 90-degree direction is correctly recognized when rotated clockwise by 90 degrees, the 90-degree direction is input.

FIG. 10A illustrates a state in which the operation guide 500 is displayed since the user who is present in the 90-degree direction of the display apparatus 2 has handwritten " 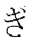 " (Japanese hiragana character, pronounced as "gi)." The display apparatus 2 performs character recognition of " 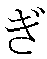 " handwritten from the 90-degree direction with the target direction of display kept at the initial value of 0 degree. Accordingly, selectable candidates 530 " 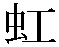 " (Japanese kanji, meaning "rainbow"), " 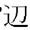 " (Japanese kanji, meaning "side"), " 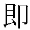 " (Japanese kanji, meaning "right away"), " 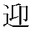 " (Japanese kanji, meaning "greet"), and " 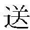 " (Japanese kanji, meaning "send") different from expectations are displayed.

For inputting the angle information, the user handwrites a straight line in the operation guide 500 from the top to the bottom when viewed from the user. FIG. 10B illustrates a straight line 521 as an example of the straight line for the angle information. An angle α between the 0-degree direction and the straight line 521 in the counterclockwise direction is the target direction of display. Specifically, a straight line 522 is drawn in the 0-degree direction from a start point S of the straight line 521 input by the user, and the angle α formed by the straight line 522 and the straight line 521 input by the user in the counterclockwise direction is the target direction of display. Therefore, in FIG. 10B, the display apparatus 2 receives 90 degrees as the target direction of display input by the user.

In an example method, a straight line is detected by converting coordinates from the start point S to an end point E into a straight line by a least squares method, and comparing the obtained correlation coefficient with a threshold value, to determine whether the correlation coefficient represents a straight line.

Immediately after the user starts drawing the straight line 521 (immediately after the user touches the start point S of the straight line 521 with the pen 2500), the display apparatus 2 erases the operation guide 500. Immediately after the end of drawing the straight line 521 (immediately after the pen 2500 is separated from the end point E of the straight line 521), the display apparatus 2 searches for the value closest to the angle α among 90 degrees, 180 degrees, 270 degrees, and 0 degree, and determines the closest value as the target direction of display. The angle α itself may be angle information. This target direction of display is associated with the pen 2500 used.

When the tip of the pen 2500 is pressed for handwriting or the like, the pen 2500 transmits the pen ID to the display apparatus 2. Therefore, the display apparatus 2 associates the target direction of display with the pen 200.

FIG. 10C illustrates the operation guide 500 immediately after the operation illustrated in FIG. 10B. Since 90 degrees is set as the target direction of display of the pen 2500, the hand drafted data is internally rotated by 90 degrees in the clockwise direction for character recognition, and the operation guide 500 is rotated counterclockwise by 90 degrees and displayed. The display apparatus 2 may allow the user to manually input angle information from a menu.

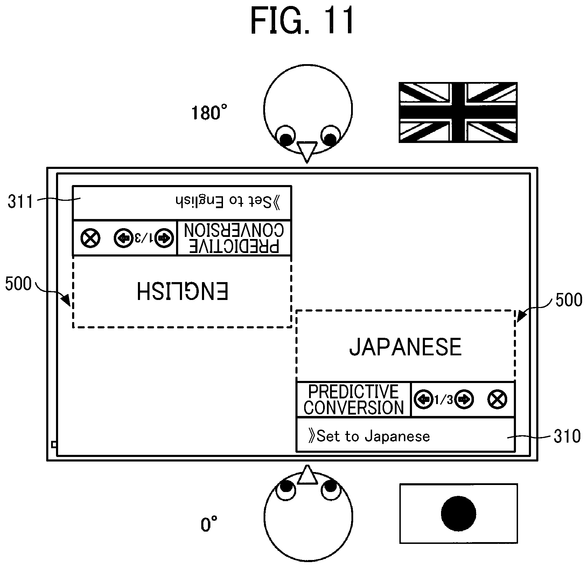

FIG. 11 is a diagram illustrating a method in which a user associates a target direction of display with a target language. In FIG. 11, one user is in the 0-degree direction and another user is in the 180-degree direction. As described with reference to FIG. 9, the display apparatus 2 determines in which direction (on which of the four sides) the user is present based on the hand drafted data. Alternatively, the target direction of display is already associated with the pen 2500 used by each user.

A user in the 0-degree direction handwrites "Japanese" for invoking an operation command of language setting. As a result, the operation guide 500 displays an operation command 310 "set to Japanese." When the user selects this operation command 310, the operation command unit 28 sets, to Japanese, the target language associated with to the 0-degree direction detected by the input direction detection unit 32, based on the hand drafted data of "Japanese." Alternatively, the operation command unit 28 sets, to Japanese, the target language associated with the 0-degree direction of the pen 2500 used by the user in the 0-degree direction.

Similarly, the user in the 180-degree direction handwrites "English" that invokes the operation command of language setting. As a result, the operation guide 500 displays an operation command 311 "set to English." When the user selects this operation command 311, the operation command unit 28 sets, to English, the target language associated with the 180-degree direction detected by the input direction detection unit 32, based on the hand drafted data of "English." Alternatively, the operation command unit 28 sets, to English, the target language associated with the 180-degree direction of the pen 2500 used by the user in the 180-degree direction. Thus, the target language storage area 41 storing the association illustrated in Table 1 is generated.

The display apparatus 2 allows the user to cancel the association between the target direction of display and the target language registered in the target language storage area 41 by executing a predetermined operation command.

Further, the hand drafted data input by the user is character-recognized in the target language associated with the target direction in which the user is located. For example, " 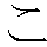 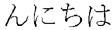 " handwritten by the user in the 0-degree direction is recognized in Japanese, and "hello" handwritten by the user in the 180-degree direction is recognized in alphabets in English.

### Example of Conversion in accordance with Target Direction of Display

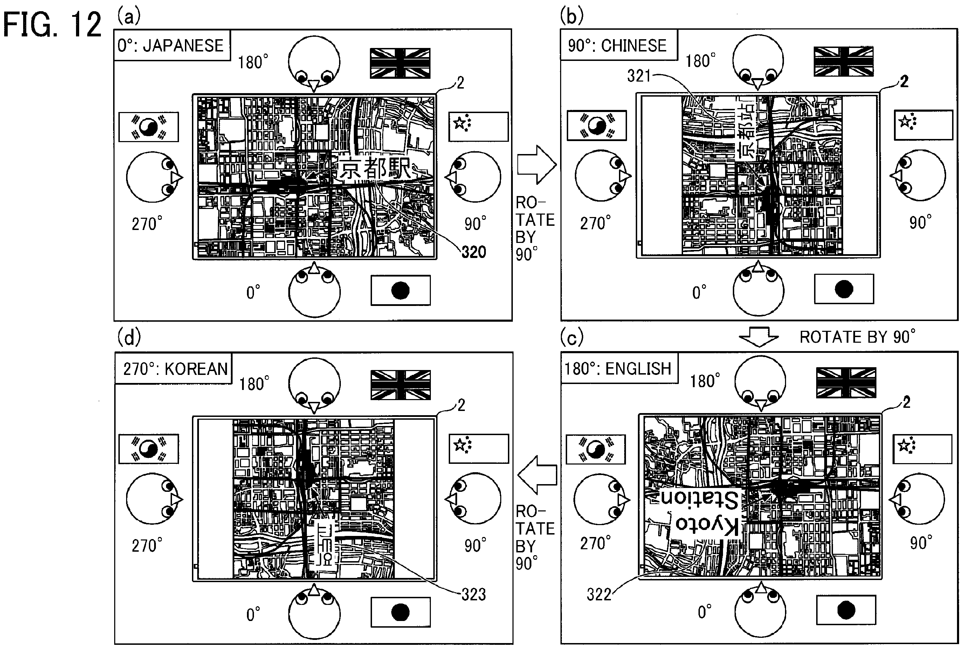

FIG. 12 is a diagram illustrating an example of conversion of a character string in accordance with a target direction of display. FIG. 12 illustrates an example in which a target language is set every 90 degrees. Japanese is associated with the 0-degree direction, Chinese is associated with the 90-degree direction, English is associated with the 180-degree direction, and Korean is associated with the 270-degree direction.

As illustrated in a state (a) of FIG. 12, the user has handwritten a Japanese character string 320 (" 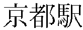 " meaning "Kyoto station") from the 0-degree direction. The input data of such a character string has the following attributes.
Angle = 0 degree, Language = Japanese

When the user inputs an operation of rotating the entire image by 90 degrees (details will be described later), the rotation processing unit 29 rotates the entire image counterclockwise by 90 degrees. In addition, the language conversion unit 30 acquires the target language associated with the 90-degree direction from the target language storage area 41, and converts the Japanese character string 320 into a Chinese character string 321 (" 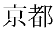 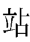 " meaning "Kyoto station") using the dictionary 44 for converting Japanese into Chinese. Note that the process of the rotation processing unit 29 and that of the language conversion unit 30 may be performed in parallel or sequentially. As a result, as illustrated in a state (b) of FIG. 12, the image and the Chinese character string 321 (" 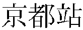 " meaning "Kyoto station") are displayed so as to face the user located in the 90-degree direction. In other words, the converted character string is in an orientation that faces the target direction of display. The input data of such a character string has the following attributes.
Angle = 90 degrees, Language = Chinese

Further, when the user inputs an operation of rotating the entire image by 90 degrees, the rotation processing unit 29 and the language conversion unit 30 perform processing similar to those described above. As a result, as illustrated in a state (c) of FIG. 12, the image and an English character string 322 (Kyoto station) converted from the Chinese character string 321 ( 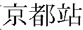 ) are displayed so as to face the user located in the 180-degree direction. The input data of such a character string has the following attributes.
Angle = 180 degrees, Language = English

Further, when the user inputs an operation of rotating the entire image by 90 degrees, the rotation processing unit 29 and the language conversion unit 30 perform processing similar to those described above. As a result, as illustrated in a state (c) of FIG. 12, the image and a Korean character string 323 (meaning "Kyoto station") are displayed so as to face the user located in the 270-degree direction. The input data of such a character string has the following attributes.
Angle = 270 degrees, Language = Korean

The display apparatus 2 receives hand drafted input from each user, regardless of the rotation state of the entire image. For example, in the state illustrated in state (d) of FIG. 12, when the user located in the 0-degree direction handwrites Japanese so as to face the user, the display apparatus 2 converts the Japanese in accordance with the target direction of display. Accordingly, the display apparatus 2 enables each user to read the character string in an understandable language as long as the user looks the character string from the direction facing the character string. When the user rotates the entire image in which each user has input handwriting in his/her own language in the direction facing him/her, the display apparatus 2 according to the present embodiment converts the character string into a language associated with the target direction of display, to enable the user in each direction to read the character string in an understandable language.

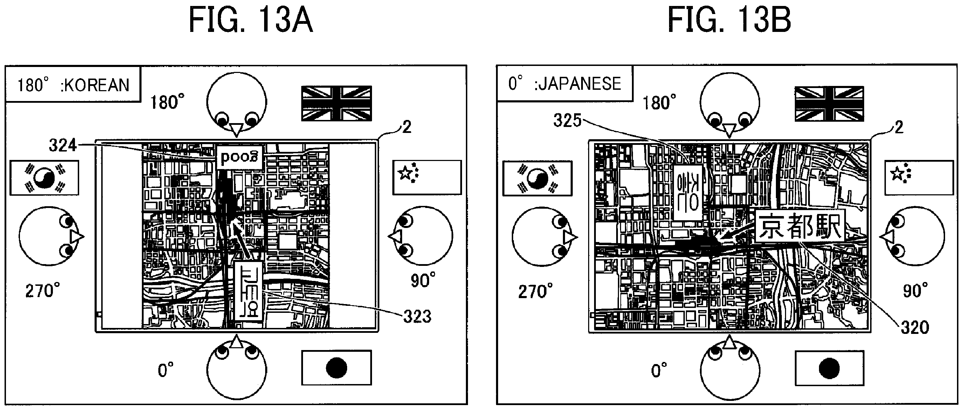

FIGS. 13A and 13B illustrate an example of conversion when there is a plurality of different language speakers at the same time. FIG. 13A illustrates the same as the state (d) of FIG. 12. The user in the 180-degree direction has input an English character string 324 (good). Therefore, in FIG. 13A, the Korean character string 323 meaning "Kyoto station" and the English character string 324 (good) are displayed. The input data of such character strings has the following attributes.
Korean: Angle = 270 degrees, Language = Korean
English: Angle = 180 degrees, Language = English

When the user further rotates by 90 degrees, the target direction of display and the target language are as follows.
Korean: Angle = 0 degree = 270+90, Language = Japanese
English: Angle = 270 degrees = 180+90, Language = Korea

Therefore, as illustrated in FIG. 13B, the Korean character string 323 is converted into the Japanese character string 320 " 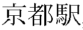 ," and the English character string 324 "good" is converted into a Korean character string 325 meaning "good." Accordingly, the display apparatus 2 displays each of a plurality of character strings of different languages in a language that can be understood by a user facing that character string. As described above, even when different languages simultaneously exist in one screen, the display apparatus 2 does not cause an inconvenience.

### Rotation Operation of Entire Image Including Character String

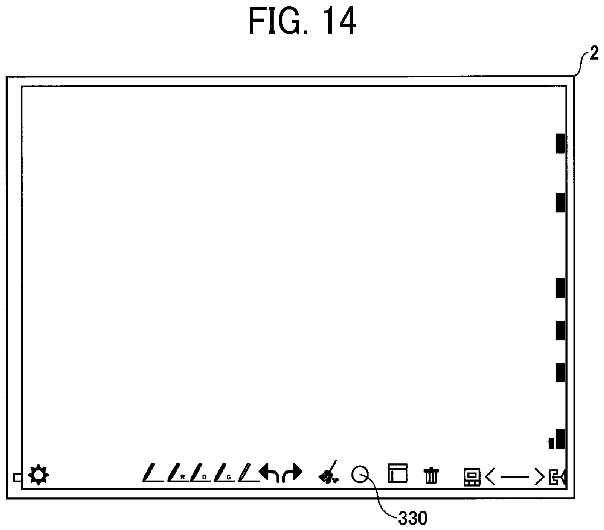

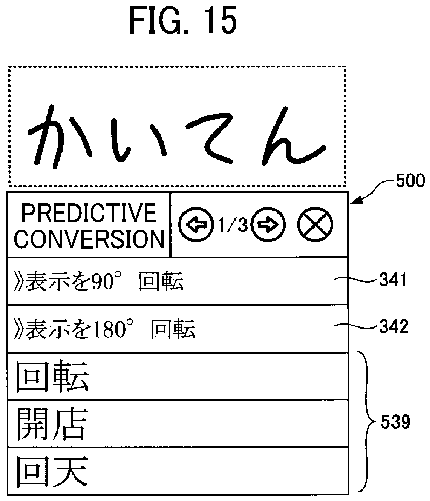

Next, a description is given of methods for the display apparatus 2 to receive the rotation operation of the entire image from the user, with reference to FIGS. 14 and 15. There are a method for receiving a user operation of an icon and a method for receiving an operation command. The display apparatus 2 receives rotation operation from not only the user who has handwritten characters but also any user.

FIG. 14 is a diagram illustrating a rotation operation using an icon 330 (an example of a graphical representation for receiving a rotation operation). The display apparatus 2 displays a tool tray on the screen, to enable the user to input a rotation operation by pressing the icon 330 in the tool tray.

When the icon 330 is pressed, the display apparatus 2 displays the rotation angles of 90 degrees, 180 degrees, and 270 degrees. The operation receiving unit 27 receives selection of the rotation angle from the user and determines the rotation angle. Alternatively, the display apparatus 2 may provide icons corresponding to the rotation angles of 90 degrees, 180 degrees, and 270 degrees. The rotation angles of 90 degrees, 180 degrees, and 270 degrees specified by the user are relative angles to which the screen is rotated with respect to the current state.

FIG. 15 is a diagram illustrating a rotation operation by execution of an operation command. When the user handwrites " 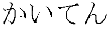 " (Japanese hiragana characters pronounced as "kaiten"), the character recognition unit 23 converts " 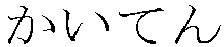 " in the language (Japanese in this example) corresponding to the target direction of display, to the character string candidates 539 " 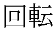 " (pronounced as "kaiten" and meaning "rotate"), " 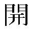 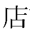 " (pronounced as "kaiten" and meaning "shop open"), and " 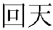 " (pronounced as "kaiten" and meaning "change stream"). Since " 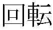 " is registered in the operation command definition data, the operation command unit 28 detects an operation command 341 " 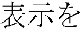 90° 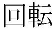 " (Japanese meaning "rotate display by 90 degrees"), an operation command 342 " 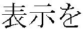 180° 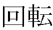 " (Japanese meaning "rotate display by 180 degrees"), and another operation command " 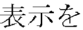 270° 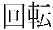 " (Japanese meaning "rotate display by 270 degrees"). The display control unit 24 displays these operation commands on the operation guide 500. In FIG. 15, only the operation command 341 " 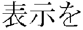 90° 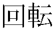 " and the operation command 342 " 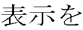 180° 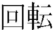 " are illustrated. Note that, although Japanese " 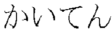 " is handwritten in FIG. 15, the language of hand drafted input is not limited thereto. For example, the display apparatus 2 receives handwritten English "rotate" and displays character string candidates such as "rotate display by 90 degrees" and "rotate display by 180 degrees."

In this way, the display apparatus 2 enables the user to rotate the entire image by operating an icon or hand drafted input, and further enables the user to convert the character string into a target language associated with the target direction of display.

A description is given of a procedure for rotating an entire image.

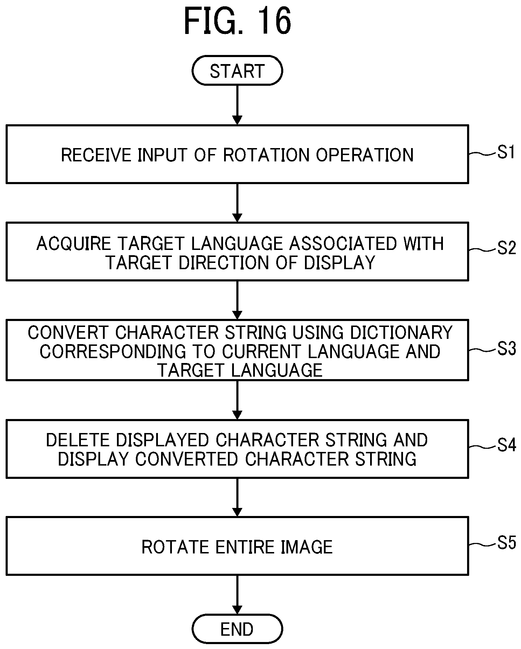

FIG. 16 is a flowchart illustrating a procedure for the display apparatus 2 to convert a character string into a target language associated with the target direction of display in response to a user operation. In FIG. 16, for convenience of explanation, it is assumed that one or more character strings are already displayed.

The operation receiving unit 27 receives an input of a rotation operation (S1). In the input method of the rotation operation, either an icon or hand drafted data may be used. Accordingly, the language conversion unit 30 acquires the rotation angle from the operation command unit 28 or from the icon operation.

The language conversion unit 30 acquires the target language associated with the target direction of display from the target language storage area 41 (S2). Since the operation receiving unit 27 receives the rotation angle (relative rotation angle from the current state), the rotation angle is added to the target direction of display of the character string currently displayed, to obtain the target direction of display after the rotation. The language conversion unit 30 acquires the target language associated with the target direction of display after rotation from the target language storage area 41. Since the input data of each character string has angle attribute and language attribute in the input data storage area 43, the language conversion unit 30 identifies the current target direction of display and the current language.

Next, the language conversion unit 30 converts the character string using the dictionary 44 corresponding to the current language and the target language (S3). The current language is the language of the character string currently displayed (language of input data), and the target language is the language associated with the target direction of display after rotation in the target language storage area 41.

The language conversion unit 30 updates the angle attribute and the language attribute of the input data of the character string.

The display control unit 24 deletes the character string currently displayed and displays the converted character string (S4).

When a plurality of character strings (having the type attributes of "Text") is displayed on the screen, steps S2 to S4 are performed for each character string.

The rotation processing unit 29 rotates the entire image (i.e., a screen image or background image) including the converted character string by the rotation angle received by the operation receiving unit 27 (S5). Alternatively, the language conversion unit 30 may convert the language of the character string after the rotation processing unit 29 rotates the entire image.

### Rotation Operation of Character String (Object)

For example, in FIG. 12, the rotation processing unit 29 rotates the entire image including the character string. However, the rotation processing unit 29 may rotate only the character string (i.e., an object in the screen image).

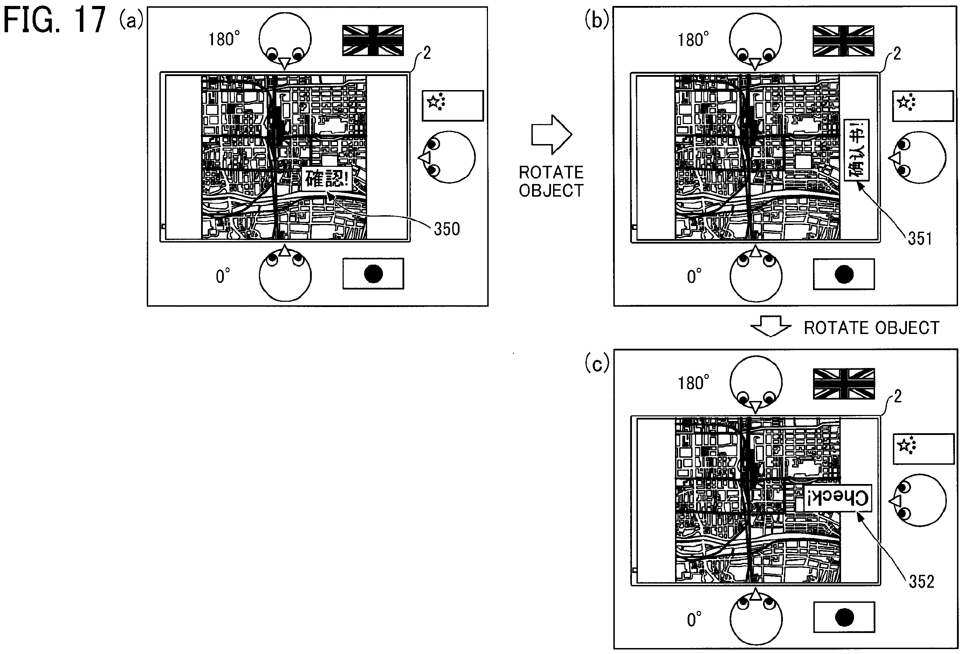

FIG. 17 is a diagram illustrating a conversion example in which a character string is rotated to the target direction of display and converted into the target language associated with the target direction of display, without rotating the screen image. In FIG. 17, Japanese is associated with the 0-degree direction, Chinese is associated with the 90-degree direction, and English is associated with the 180-degree direction.

In a state (a) of FIG. 17, the user located in the 0-degree direction has handwritten a Japanese character string 350 " 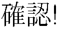 " (meaning "check"). When any of the users around the display inputs an operation of rotating the Japanese character string 350 " 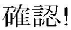 " by 90 degrees, the language conversion unit 30 acquires the target language associated with the 90-degree direction (current angle is 0 degree) from the target language storage area 41. The language conversion unit 30 converts the Japanese character string 350 " 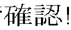 " into a Chinese character string 351 using the dictionary 44 for converting Japanese into Chinese.

Then, the rotation processing unit 29 rotates the Chinese character string 351 (i.e., an object) counterclockwise by 90 degrees. Note that the process of the rotation processing unit 29 and that of the language conversion unit 30 may be performed in parallel or sequentially. As a result, as illustrated in a state (b) of FIG. 17, the Chinese character string 351 is displayed facing the 90-degree direction. The input data of the Chinese character string 351 is updated to have the angle attribute of 90 degrees, the language attribute of Chinese, and the text attribute of the Chinese word meaning "check!"

When the user inputs an operation to further rotate the Chinese character string 351 by 90 degrees, the rotation processing unit 29 and the language conversion unit 30 perform similar processing. As a result, as illustrated in a state (c) of FIG. 17, an English character string 352 "Check!" is displayed facing the 180-degree direction. The input data of the English character string 352 is updated to have the angle attribute of 180 degrees, the language attribute of English, and the text attribute of the English word "check!"

In this manner, when the display apparatus 2 rotates only the character string without rotating the screen image, a complicated image such as a map is kept stationary, and thus there is an advantage that each user can easily view the image.

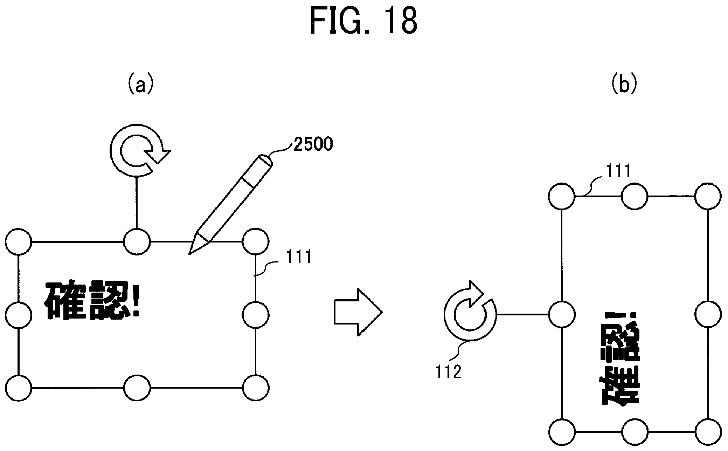

FIG. 18 is a diagram illustrating a method for the display apparatus 2 to receive an operation of rotating a character string without rotating a screen image. An example of rotating an object such as a character string will be described.

The user selects a character string with the pen 2500 as illustrated in a state (a) of FIG. 18.

Then, the display control unit 24 displays a text box 111.

The user presses a rotation bar 112 of the text box 111 with the pen 2500 to rotate the rotation bar 112 to a desired direction as illustrated in a state (b) of FIG. 18. The operation receiving unit 27 receives the rotation angle.

As described above, the operation method differs between the rotation of the entire image and the rotation of the character string. This configuration allows the user to selectively use the operation method in consideration of the difference between viewability provided by rotating the entire image and viewability provided by rotating the character string.

An operation command may be used to rotate the character string.

A description is given of a procedure for rotating a character string.

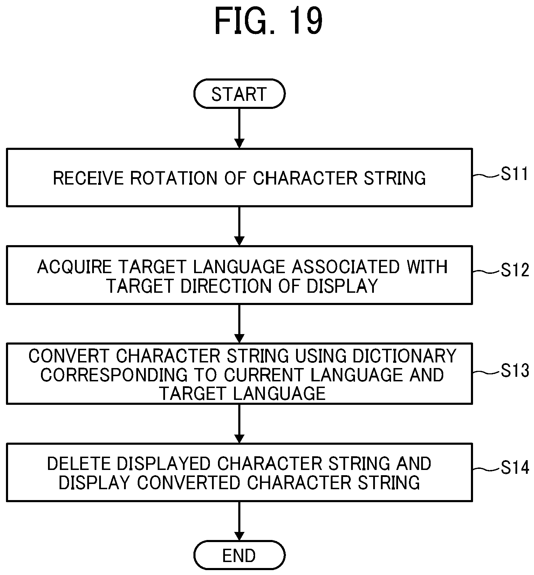

FIG. 19 is a flowchart illustrating a procedure for the display apparatus 2 to convert a character string into a target language associated with the target direction of display in response to a user operation. In the description referring to FIG. 19, for simplicity, differences from FIG. 16 are mainly described.

The operation receiving unit 27 receives a rotation operation of a character string as illustrated in FIG. 18 (S11). The language conversion unit 30 acquires the rotated character string and the rotation angle from the operation receiving unit 27.

The language conversion unit 30 acquires the target language associated with the target direction of display from the target language storage area 41 (S12). This operation is similar to the operation performed in S2 in FIG. 16.

Next, the language conversion unit 30 converts the character string using the dictionary 44 corresponding to the current language and target language (S13). This operation is similar to the operation performed in S3 in FIG. 16.

The display control unit 24 deletes the character string currently displayed, rotates the converted character string by the rotation angle received by the operation receiving unit 27, and then displays the converted character string (S14).

### Designation of Target Direction of Display by Tilt Sensor

The display apparatus 2 allows the user to designate the target direction of display by tilting the display apparatus 2, in addition to by inputting an operation command or by operating an icon.

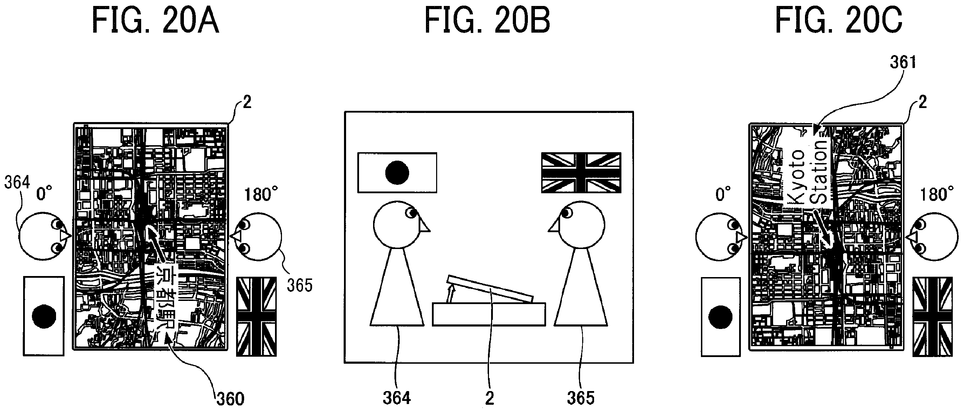

FIGS. 20A to 20C are diagrams illustrating an example in which the display apparatus 2 receives designation of a target direction of display by being tilted by a user. FIG. 20A is a top view of the display apparatus 2 placed on a horizontal plane. In the 0-degree direction and the 180-degree direction, users 364 and 365 are respectively present. The target language associated with the 0-degree direction is Japanese, and the target language associated with the 180-degree direction is English. A Japanese character string 360 " 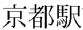 " is displayed facing the 0-degree direction.

As illustrated in FIG. 20B, when the user 364 lifts the end of the display apparatus 2 closer to the user 364, the tilt detection unit 31 (see FIG. 6) detects that the gravity direction has changed to the 180-degree direction. Lifting an end of the display apparatus 2 is an example of operation of changing the target direction of display. The display apparatus 2 converts the Japanese character string 360 " 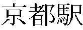 " into the target language associated with the 180-degree direction and displays the converted character string. In FIG. 20C, an English character string "Kyoto station" 361 converted from the Japanese " 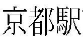 " displayed.

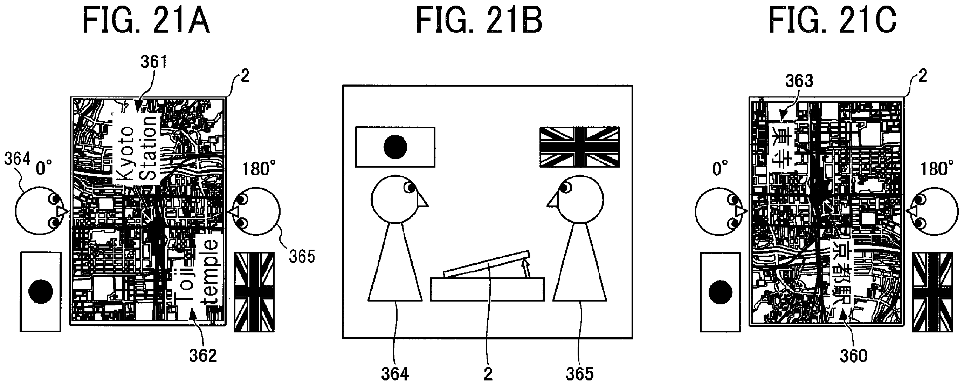

In a case where the user 365 in the 180-degree direction handwrites an English character string, the display apparatus 2 converts the character string similarly. FIG. 21A is a top view of the display apparatus 2 placed on a horizontal plane. An English character string 362 "Toji temple" is displayed in the direction facing the user 365 in the 180-degree direction.

As illustrated in FIG. 21B, when the user 365 lifts the end of the display apparatus 2 closer to the user 365, the tilt detection unit 31 detects that the gravity direction has changed to the 0-degree direction. The display apparatus 2 converts the English character string 361 into the target language associated with the 0-degree direction and displays the converted character string. In FIG. 21C, a Japanese character string " 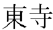 " 363 is displayed.

In this way, the display apparatus 2 converts the character string into the target language associated with the target direction of display and rotate the entire image according to the user operation of tilting the display apparatus 2 toward the direction of the other user.

In alternative to or in addition to the tilt sensor, an accelerometer or a gyro sensor may be used to detect the gravity direction.

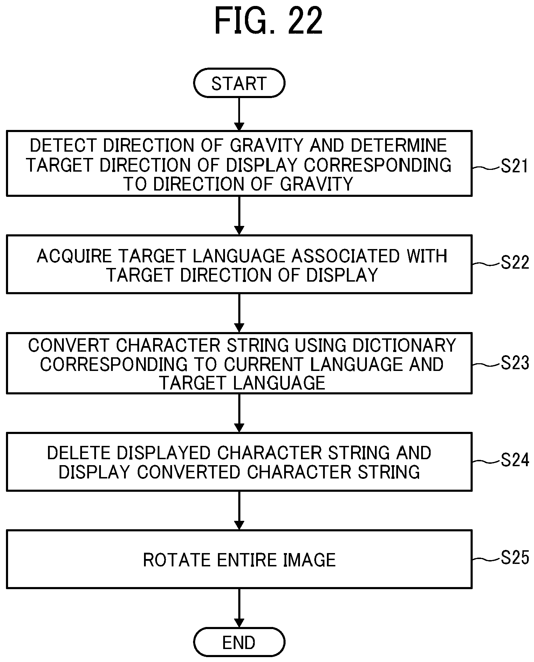

FIG. 22 is a flowchart illustrating a procedure for the display apparatus 2 to convert a character string into a target language associated with the target direction of display in accordance with the direction of gravity. In the following description with reference to FIG. 22, differences from FIG. 11 are described.

The tilt detection unit 31 detects the direction of gravity acting on the display apparatus 2 based on a user operation (operation of changing the target direction of display), and determines, as a changed target direction of display, the direction corresponding to one of the four sides of the display apparatus 2 on which gravity acts most (S21). The tilt detection unit 31 maintains the original target direction of display until the difference in gravity between the side on which the greatest gravity acts and the side on which the second greatest gravity acts becomes equal to or greater than a threshold. This is to prevent hunting for the target direction of display. Thus, the language conversion unit 30 acquires the target direction of display from the tilt detection unit 31.

The language conversion unit 30 acquires the target language associated with the target direction of display from the target language storage area 41 (S22). Since the language conversion unit 30 has acquired the target direction of display instead of the rotation angle, the target language associated with the target direction of display may be acquired from the target language storage area 41.

The subsequent process from S23 to S25 is similar to that from S3 to S5 in FIG. 16.

### Font Setting

The display apparatus 2 may allow the user to set a desired font for the language. The display apparatus 2 can display a character string in a font corresponding to a target direction of display and a language.

**Table 4**

| Direction of display (degree) | Target language: Font |
|---|---|
| 0 | Japanese: Mincho |
| 90 | Chinese: Song |
| 180 | English: Serif |
| 270 | Korean: Mincho Korean |

Table 4 illustrates an example of the target language storage area 41 in which fonts are set. In Table 4, a fonts is set in pair with a target language. This is because different languages have different fonts.

Mincho is set for Japanese associated with 0-degree direction, and Song is set for Chinese of associated with 90-degree direction. Serif is set for English associated with 180-degree direction, and Mincho Korean is set for Korean associated with 270-degree direction.

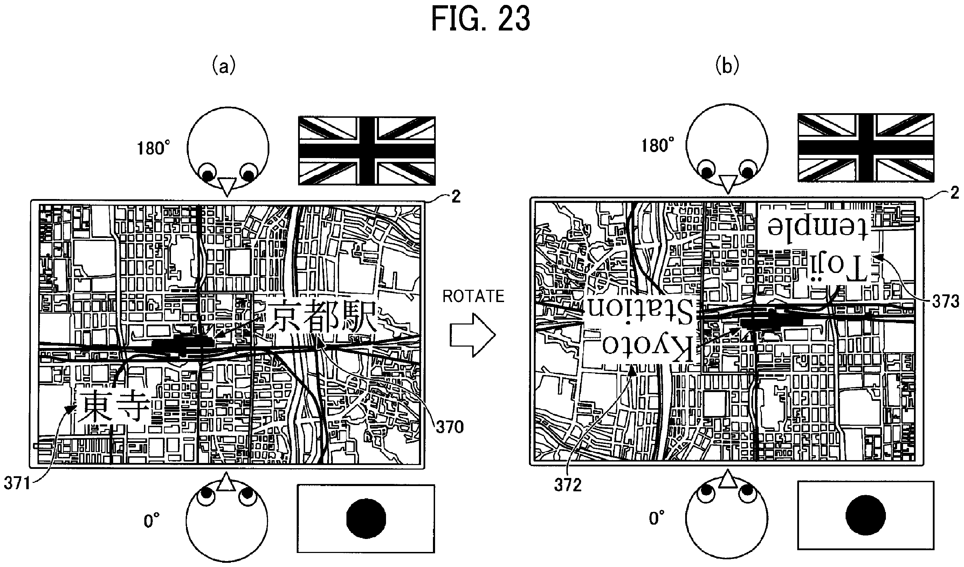

FIG. 23 is a diagram illustrating conversion into a target language and a font associated with a target direction of display. In a state (a) of FIG. 23, a Japanese character string 370 " 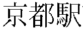 " and another Japanese character string 371 " 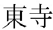 " are displayed in Mincho font, in the orientation facing the 0-degree direction. When the user rotates the entire image by 180 degrees, as illustrated in a state (b) of FIG. 23, an English character string 372 "Kyoto station" corresponding to " 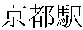 " and an English-language character string 373 corresponding to " 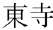 " are displayed in Serif font in the orientation facing the 180-degree direction.

In this way, the display apparatus 2 displays character strings of each language in a font desired by the user. In order to associate the target language with the font, there is a method in which the display apparatus 2 displays an operation command in response to receiving the user's handwriting such as "font" from each target direction of display, and receiving selection of a desired font. When the operation command is selected, the operation command unit 28 registers the corresponding font in association with the target language in the target language storage area 41.

### Embodiment 2

Descriptions are given of examples of a configuration of a display system according to embodiments.

A description is given below of an example of the configuration of the display system according to an embodiment.

Although the display apparatus 2 described above has a large touch panel, the display apparatus 2 is not limited thereto.

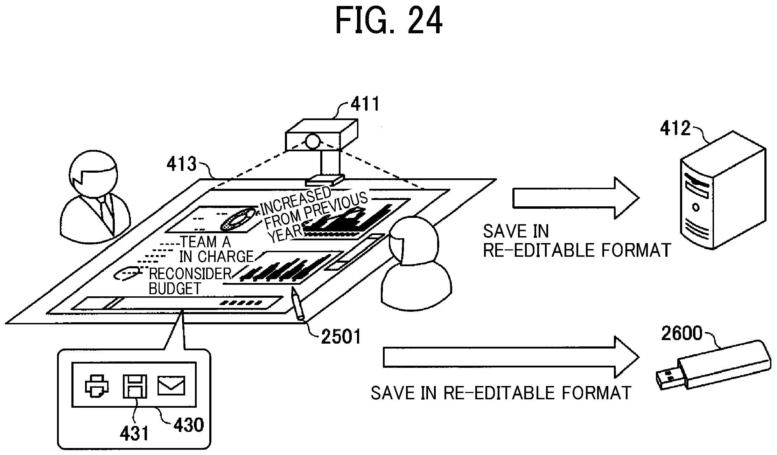

FIG. 24 is a diagram illustrating another example of the configuration of the display system. The display system includes a projector 411, a standard whiteboard 413, and a server 412, which are communicable via a network. In FIG. 24, the projector 411 is installed on one side of the whiteboard 413 placed horizontally. The projector 411 mainly operates as the display apparatus 2 described above. The projector 411 is a general-purpose projector, but installed with software that causes the projector 411 to function as the functional units illustrated in FIG. 6. The whiteboard 413 placed horizontally is not a flat panel display integral with a touch panel, but is a standard whiteboard to which a user directly handwrites or hand-draws information with a marker. Note that the whiteboard 413 may be a blackboard, and may be simply a plane having an area large enough to project an image.

The projector 411 employs an ultra short-throw optical system and projects an image (video) with reduced distortion from a distance of about 10 cm to the whiteboard 413. This video may be transmitted from a PC connected wirelessly or by wire, or may be stored in the projector 411.

The user performs handwriting on the whiteboard 413 using a dedicated electronic pen 2501. The electronic pen 2501 includes a light-emitting element, for example, at a tip thereof. When a user presses the electronic pen 2501 against the whiteboard 413 for handwriting, a switch is turned on, and the light-emitting element emits light. The wavelength of the light from the light-emitting element is near-infrared or infrared, which is invisible to the user's eyes. The projector 411 includes a camera. The projector 411 captures, with the camera, an image of the light-emitting element, analyzes the image, and determines the direction of the electronic pen 2501. Further, the electronic pen 2501 emits a sound wave in addition to the light, and the projector 411 calculates a distance based on an arrival time of the sound wave. The projector 411 determines the position of the electronic pen 2501 based on the direction and the distance. Thus, the contact position detection unit 21 is implemented by the camera and a sound wave receiver.

A handwritten object is drawn (projected) at the position of the electronic pen 2501.

The projector 411 projects a menu 430. When the user presses a button of the menu 430 with the electronic pen 2501, the projector 411 determines the pressed button based on the position of the electronic pen 2501 and the ON signal of the switch. For example, when a save button 431 is pressed, hand drafted data (coordinate point sequence) input by the user is saved in the projector 411. The projector 411 stores handwritten information in the predetermined server 412, a USB memory 2600, or the like. The hand drafted data is stored for each page. The hand drafted data is stored not as image data but as coordinates, and the user can re-edit the content. Note that, in the present embodiment, an operation command can be called by handwriting, and the menu 430 does not have to be displayed.

### Embodiment 3

A description is given below of another example of the configuration of the display system.

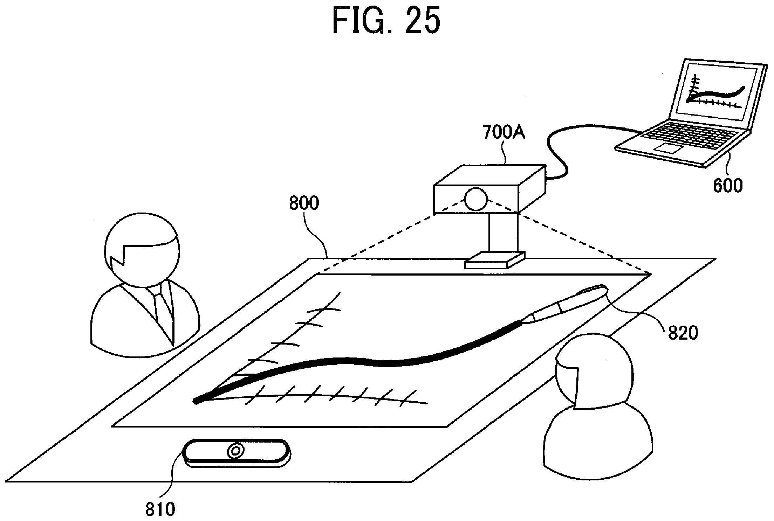

FIG. 25 is a diagram illustrating an example of the configuration of the display system according to another embodiment. In the example illustrated FIG. 25, the display system includes a terminal 600 (information processing terminal such as a PC), an image projector 700A, and a pen motion detector 810.

The terminal 600 is wired to the image projector 700A and the pen motion detector 810. The image projector 700A projects an image onto a screen 800 according to data input from the terminal 600.

The pen motion detector 810 communicates with an electronic pen 820 to detect a motion of the electronic pen 820 in the vicinity of the screen 800 placed horizontally. More specifically, the pen motion detector 810 detects coordinate information indicating the position pointed by the electronic pen 820 on the screen 800 and transmits the coordinate information to the terminal 600. The detection method may be similar to that of FIG 24. Thus, the contact position detection unit 21 is implemented by the pen motion detector 810.

Based on the coordinates received from the pen motion detector 810, the terminal 600 generates image data based on hand drafted input by the electronic pen 820 and causes the image projector 700A to project, on the screen 800, an image based on the hand drafted data.

The terminal 600 generates data of a superimposed image in which an image based on hand drafted input by the electronic pen 820 is superimposed on the background image projected by the image projector 700A.

### Embodiment 4

A description is given below of another example of the configuration of the display system.

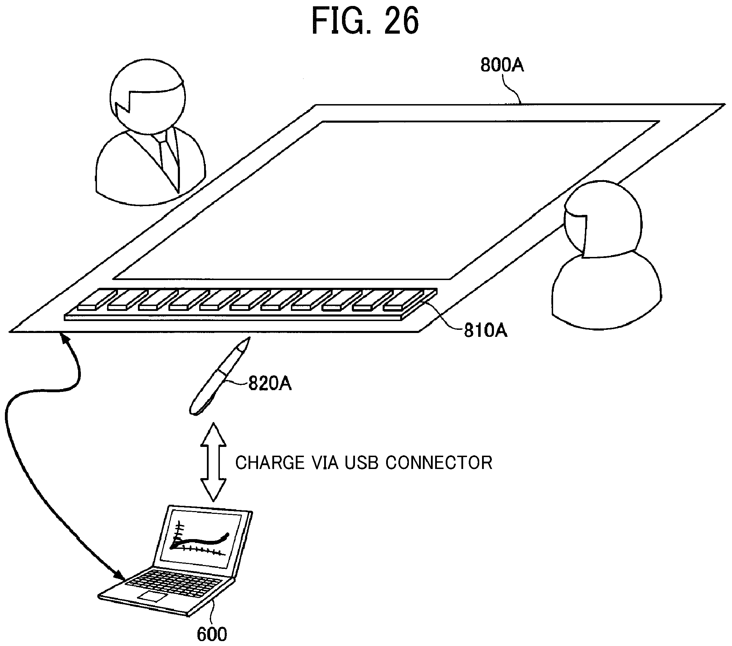

FIG. 26 is a diagram illustrating an example of the configuration of the display system according to another embodiment. In the example illustrated in FIG. 26, the display system includes the terminal 600, a display 800A placed horizontally, and a pen motion detector 810A.

The pen motion detector 810 is disposed in the vicinity of the display 800A. The pen motion detector 810 detects coordinate information indicating a position pointed by an electronic pen 820A on the display 800A and transmits the coordinate information to the terminal 600. The coordinate information may be detected in a method similar to that of FIG. 24. In the example illustrated FIG. 26, the electronic pen 820A may be charged from the terminal 600 via a USB connector.

Based on the coordinate information received from the pen motion detector 810, the terminal 600 generates image data of hand drafted data input by the electronic pen 820A and displays an image based on the hand drafted data on the display 800A.

### Embodiment 5

A description is given below of another example of the configuration of the display system.

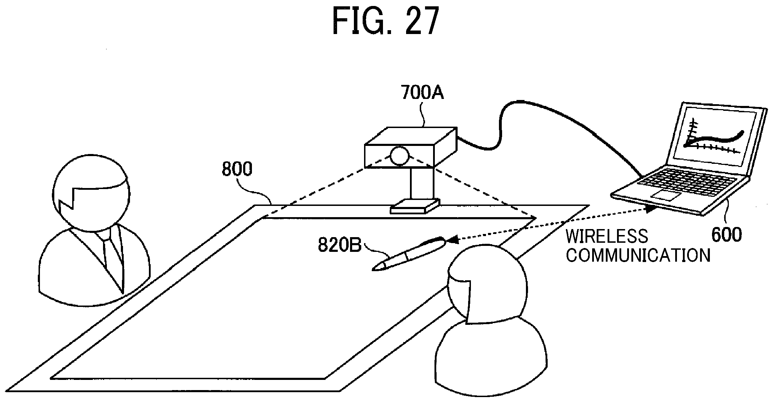

FIG. 27 is a diagram illustrating an example of the configuration of the display system according to another embodiment. In the example illustrated FIG. 27, the display system includes the terminal 600 and the image projector 700A.

The terminal 600 communicates with an electronic pen 820B through by wireless communication such as BLUETOOTH, to receive coordinate information indicating a position pointed by the electronic pen 820B on the screen 800 placed horizontally. The electronic pen 820B may read minute position information on the screen 800, or receive the coordinate information from the screen 800.

Based on the received coordinate information, the terminal 600 generates image data of hand drafted data input by the electronic pen 820B, and controls the image projector 700A to project an image based on the hand drafted data.

The terminal 600 generates data of a superimposed image in which an image based on hand drafted data input by the electronic pen 820B is superimposed on the background image projected by the image projector 700A.

The embodiments described above are applied to various system configurations.

Now, descriptions are given of other application of the embodiments described above.

The present disclosure is not limited to the details of the embodiments described above, and various modifications and improvements are possible.

The display apparatus 2 stores the character string as one or more character codes and stores the hand drafted data as coordinate point data. The data can be saved in various types of storage media or in a memory on a network, to be downloaded from the display apparatus 2 to be reused later. The display apparatus 2 to reuse the data may be any display apparatus and may be a general information processing device. This allows a user to continue a conference or the like by reproducing the hand drafted content on different display apparatuses 2.

In the description above, an electronic whiteboard is described as an example of the display apparatus 2, but this is not limiting. A device having a substantially the same functions as the electronic whiteboard may be referred to as an electronic information board, an interactive board, or the like. The present disclosure is applicable to any information processing apparatus with a touch panel. Examples of the information processing apparatus with a touch panel include, but not limited to, a projector (PJ), a data output device such as a digital signage, a head up display (HUD), an industrial machine, an imaging device such as a digital camera, a sound collecting device, a medical device, a network home appliance, a laptop computer, a mobile phone, a smartphone, a tablet terminal, a game console, a personal digital assistant (PDA), a wearable PC, and a desktop PC.

Further, in the embodiments described above, the display apparatus 2 detects the coordinates of the tip of the pen with the touch panel. However, the display apparatus 2 may detect the coordinates of the pen tip using ultrasonic waves. For example, the pen emits an ultrasonic wave in addition to the light, and the display apparatus 2 calculates a distance based on an arrival time of the sound wave. The display apparatus 2 determines the position of the pen based on the direction and the distance. The projector draws (projects) the trajectory of the pen based on stroke data.

In the block diagram such as FIG. 6, functional units are divided into blocks in accordance with main functions of the display apparatus 2, in order to facilitate understanding the operation by the display apparatus 2. Each processing unit or each specific name of the processing unit is not to limit a scope of the present disclosure. The processing implemented by the display apparatus 2 may be divided into a larger number of processing units depending on the content of the processing. In addition, a single processing unit can be further divided into a plurality of processing units.

A part of the processing performed by the display apparatus 2 may be performed by a server connected to the display apparatus 2 via a network. A part or all of the target language storage area 41, the operation command definition data storage area 42, the input data storage area 43, and the dictionaries 44 may be stored in one or more servers.

For example, the language conversion unit 30 may reside on the server, which may be implemented by one or more information processing apparatuses.

Specifically, the server implements, in one example, the functional units in FIG. 6 other than the contact position detection unit 21, the drawing data generation unit 22, the display control unit 24, the network communication unit 26, and the operation receiving unit 27.

In such case, at the display apparatus 2, the contact position detection unit 21 detects coordinates of the position touched by the pen 2500. The drawing data generation unit 22 generates stroke data based on the detected coordinates. The network communication unit 26 transmits the stroke data to the server. At the server, the character recognition unit 23 performs character recognition processing on the stroke data received, to convert the stroke data into one or more character codes of the language associated with the direction of display.

Then, at the display apparatus 2, the operation receiving unit 27 or the operation command unit 28 receives an operation of changing the direction of display of the character string and transmits the information of the operation of changing to the server. At the server, the language conversion unit 30 converts the character string (character codes) into a character string of the target language associated with the rotated direction of display. The server then transmits the character string of the target language to the display apparatus 2. The display control unit 24 displays, on the display, the character string of the target language in the rotated direction of display.

The drawing data generation unit 22 may be provided at the server, if the server is capable of processing coordinate data.

Further, the functions of the character recognition unit 23 and the language conversion unit 30 may be distributed over a plurality of apparatuses. For example, character recognition processing on the stroke data, to convert the stroke data into character codes of the recognition language associated with the direction of display may be performed at the display apparatus 2, while converting (translating) from the recognition language to the target language may be performed at the server.

Each of the functions of the described embodiments may be implemented by one or more processing circuits or circuitry. Here, the "processing circuit or circuitry" in the present specification includes a programmed processor to execute each function by software, such as a processor implemented by an electronic circuit, and devices, such as an application specific integrated circuit (ASIC), a digital signal processors (DSP), a field programmable gate array (FPGA), and conventional circuit modules designed to perform the recited functions.

The language conversion unit 30 is an example of the acquisition unit and a conversion unit. The display control unit 24 is an example of a display control unit. The character recognition unit 23 is an example of a character recognition unit. The operation command unit 28 is an example of a receiving unit. The operation receiving unit 27 is another example of the receiving unit. The tilt detection unit 31 is an example of a display direction detection unit. The contact position detection unit 21 is an example of a hand drafted input receiving unit. The input direction detection unit 32 is an example of an input direction detection unit. The target language storage area 41 is an example of a memory.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The present disclosure provides significant improvements in computer capabilities and functionalities. These improvements allow a user to utilize a computer which provides for more efficient and robust interaction with a display. Moreover, the present disclosure provides for a better user experience through the use of a more efficient, powerful and robust user interface. Such a user interface provides for a better interaction between a human and a machine.

## Claims

1. A display system comprising:
a receiving unit (27; 28) configured to receive an operation of changing a direction of display of a character string displayed in a first direction on a display;
an acquisition unit (30) configured to acquire a second direction corresponding to the operation of changing;
a conversion unit (30) configured to acquire, from a memory, a target language associated with the second direction and convert the character string into the acquired target language; and
a display control unit (24) configured to control the display to display a converted character string in the target language and in the second direction.

2. The display system according to claim 1, further comprising:
a hand drafted input receiving unit (21) configured to receive input of hand drafted data; and
a character recognition unit (23) configured to convert the hand drafted data into another character string,
wherein the display control unit (24) displays, based on the another character, an operation command for receiving the operation of changing, and
wherein the receiving unit (28) acquires the second direction based on selection of the operation command.

3. The display system according to claim 1,
wherein the display control unit (24) displays a graphical representation for receiving the operation of changing, and
wherein the receiving unit (27) acquires the second direction based on selection of the graphical representation.

4. The display system according to any one of claims 1 to 3, further comprising a display direction detection unit (31) configured to:
detect the direction of gravity acting on the display apparatus in response to the operation of changing; and
determine the second direction based on the direction of gravity.

5. The display system according to any one of claims 1 to 4,
wherein the display control unit (24) displays a screen image in the second direction in addition to the converted character string.

6. The display system according to any one of claims 1 to 3,
wherein the display control unit (24) displays the character string in the second direction while displaying a screen image in the first direction.

7. The display system according to claim 2, further comprising an input direction detection unit (32) configured to detect, based on the hand drafted data, the direction of display facing a user who has input the hand drafted data,
wherein the receiving unit (21) registers association between the detected direction of display and the target language in the memory based on selection of an operation command related to the direction of display.

8. The display system according to claim 2, further comprising an input direction detection unit (32),
wherein the hand drafted input receiving unit (21) receives hand drafted data input indicating angle information,
wherein the input direction detection unit (32) is configured to:
receive identification information of an input device having been used to input the hand drafted data indicating angle information, from the input device; and
detect the direction of display facing a user who has input the hand drafted data indicating angle information, and
wherein the receiving unit (21) registers association between the detected direction of display and the target language in the memory based on selection of an operation command related to the direction of display.

9. The display system according to claim 2 or 3, further comprising a data recording unit (25) configured to record a current direction of display of each character string as the first direction,
wherein the conversion unit (30) receives a rotation angle relative to the current direction of display, and adds the rotation angle to the current direction of display, to acquire the second direction.

10. The display system according to any one of claims 1 to 9,
wherein the target language is associated with a font in addition to the direction of display in the memory, and
wherein the display control unit (24) displays the converted character string in the target language and in the font associated with the target language.

11. The display system according to claim 1,
wherein the display control unit (24) displays the converted character string in an orientation facing the direction of display.

12. The display system according to any one of claims 1 to 11,
wherein the receiving unit (27; 28) and the display control unit (24) are implemented by a display apparatus (2), and the acquisition unit (30) and the conversion unit (30) are implemented by one or more servers.

13. A display method comprising:
receiving (S1) an operation of changing a target direction of display of a character string displayed in a first direction on a display;
acquiring (S1) a second direction corresponding to the operation of changing;
acquiring (S2), from a memory, a target language associated with the second direction;
converting (S3) the character string into the target language; and
controlling (S4) the display to display a converted character string in the target language and in the second direction.

14. Carrier means carrying computer readable codes for controlling a computer to carry out the method according to claim 13.
